# EUROPÄISCHE PATENTSCHRIFT

(11) **EP 1 174 249 B1**
(45) Veröffentlichungstag und Bekanntmachung des Hinweises auf die Patenterteilung: **05.07.2006**
(21) Anmeldenummer: 01117437.2
(22) Anmeldetag: 19.07.2001
(51) Int. Cl.: B29C 67/20, B29C 44/56

(54) **Stabile Gitternetzstruktur aus Kunststoff und Verfahren zu deren Herstellung**
Rigid reticulated porous structure of plastic and method of making
Structure poreuse réticulée rigide de plastique et méthode de fabrication

(30) Priorität: 21.07.2000 DE 10035576
(43) Veröffentlichungstag der Anmeldung: 23.01.2002
(73) Patentinhaber: M.Pore Gmbh, 01277 Dresden (DE)
(72) Erfinder: Dr. Dieter Girlich, 01309 Dresden (DE); Dr. Jürgen Schädlich-Stubenrauch, NL 6291 CN Vaals (NL)
(74) Vertreter: Kaufmann, Sigfrid

(56) Entgegenhaltungen:
- EP-A- 0 515 838
- GB-A- 1 112 896
- GB-A- 2 099 722

## Beschreibung

Die Erfindung betrifft die Herstellung offenporiger Strukturen aus Kunststoff mit vorzugsweise großen geometrischen Abmessungen, die sich durch vergleichsweise hohe Stabilität bei geringem spezifischen Gewicht auszeichnen.

Gitternetzstrukturen aus Kunststoff, hauptsächlich durch Retikulieren von Polyurethanschäumen hergestellt, sind seit längerem in den verschiedensten Ausführungen bekannt. So werden in DE 40 40 023 und DE 43 18 654 Verfahren zur Herstellung von flexiblen bzw. elastischen offenzelligen Polyurethanschaumstoffen beschrieben; Verfahren zur Herstellung harter Polyurethanschaumstoffe sind in DE 42 25 765 und DE 43 03 556 offenbart. Des weiteren werden beispielsweise in DE 43 17 531 und DE 44 16 623 Methoden zur Erzeugung von Gitternetzstrukturen durch Retikulieren vorgestellt. Zudem ist aus GB-A-1112896 eine stabile Gitternetzstruktur aus Kunststoff, die aus einem retikulierten, ihre Geometrie bestimmenden Schaumstoff, dessen Stege allseitig und gleichmäßig mit Kunststoffpulver mit einer einzigen Schicht beschichtet sind, bekannt.

Mit keiner der bekannten Lösungen des Standes der Technik ist es ohne weiteres möglich, relativ dicke Stege der Gitternetzstrukturen herzustellen.

Zudem ist bislang eine automatisierte Fertigung mechanisch stabiler Gitternetzstrukturen praktisch nicht möglich, da der Schäumungsprozeß weiche Grundmaterialien voraussetzt. Aber auch selbstaushärtende Kunststoffe genügen nur sehr geringen Anforderungen, da sie nur dünne und demzufolge leicht brüchige und/oder elastische Stege bilden. Strukturierte Hohlkörper, die hohen Beanspruchungen entsprechen, werden deshalb durch aufwendige Handarbeit aus Elementarbauteilen gefertigt. Damit ist eine nahezu unbegrenzte Palette von Strukturen möglich ist. Wirtschaftlich trägt sich diese Vorgehensweise allerdings nur bei Sonderanfertigungen, z. B. für Halbzeuge in der Implantattechnik, wo es um das Einwachsen des Implantats in die Knochensubstanz geht. Weiterhin ist bekannt, komplexe Hohlraumstrukturen als Einzelteile im Rapid-Prototyping-Verfahren durch Lasersintern aufzubauen. Dieses Verfahren ist jedoch gleichfalls für die Serienfertigung ungeeignet und zudem in der Auswahl der hierfür verwendbaren Materialien stark eingeschränkt.

Ziel der Erfindung ist es, eine mechanisch stabile Gitternetzstruktur aus Kunststoff, die in großen Stückzahlen und in großen Abmessungen herstellbar ist, vorzuschlagen. Dabei steht die Aufgabe, einen bezüglich der Festigkeitskennwerte quasi homogenen Werkstoff, der mit kurzen Prozeßzeiten realisierbar ist, zu entwickeln.

Erfindungsgemäß besteht diese Gitterstruktur aus einem retikulierten, ihre Geometrie bestimmenden Schaumstoff, vorzugsweise einem Polyurethanschaumstoff und hier wiederum einen harten Polyurethanschaumstoff, der allseitig mit einem Kunststoffpulver beschichtet ist. Die Pulverschicht, die erfindungsgemäß aus mehreren gleichartigen und/oder unterschiedlichen Einzelschichten besteht, ist innerhalb der gesamten Struktur gleich dick, so daß eine definierte und homogene Festigkeitsstruktur besteht. Damit hebt sich der erfindungsgemäße Werkstoff nachhaltig von Polyurethanschäumen, die verfahrensbedingt nur oberflächennah pulverbeschichtet werden können (vgl. DE 42 33 122) ab; die Eindringtiefe, ca. 1 cm bei 10 ppi (pores per inch) Polyurethanschaum, ist für das Erreichen einer homogenen Gitternetzstruktur für praktische Anwendungsfälle zu gering.

Das Prinzip der Erfindung beruht darauf, daß zunächst die Vorstruktur aus retikuliertem Polyurethanschaum über die Glastemperatur des Beschichtungspulvers erwärmt wird, um feines Kunststoffpulver auf der Oberfläche der Stege zu binden. Die Pulverbeschichtung wird wiederholt, bis die gewünschte Schichtdicke erreicht ist. Anschließend wird das Kunststoffpulver in einem Ofen geschmolzen oder über der Glastemperatur gehalten, wodurch sich eine gleichmäßige Schicht auf der Vorstruktur ausbildet. Nach dem Abkühlen härtet die Schicht aus; damit liegt ein mechanisch stabiles Gittergerüst vor.

Der Prozeß dieses Verfahrens kann beispielsweise wie folgt ausgeführt werden:
a) Die Schaum-Vorstruktur wird in einen Ofen eingelegt und solange im Umlaufverfahren mittels Luft oder Inertgas erwärmt, bis die Temperatur des Innern der Struktur über der Glastemperatur liegt; um die Oberfläche gezielt zu beeinflussen, ist es ggf. zweckmäßig, die Erwärmung im Dampfautoklaven oder Flüssigkeitsbad vorzunehmen.
b) Die Struktur wird in einen abgeschlossenen Behälter eingebracht und - z. B. im Wirbelschichtverfahren - von dem Beschichtungspulver durchströmt; dieser Schritt wird bei vollständiger Beschichtung der Stege beendet.
c) Die Struktur wird in einen Ofen eingebracht und längere Zeit über die Glastemperatur/dem Schmelzpunkt erwärmt; dieser Schritt wird beendet, wenn das Beschichtungspulver zerlaufen ist und die Stege der Struktur infolge dessen gleichmäßig benetzt sind.
d) Zum Erreichen dickerer Schichten werden die Schritte a) bis c) mehrmals wiederholt.

Es hat sich auch herausgestellt, daß es vorteilhaft ist, mindestens zwei Beschichtungen mit einem selbstaushärtenden flüssigen Kunststoff oder Crowning-Kunstharzpulver durchzuführen; die Struktur ist dann sehr fest und temperaturbeständig. Die Anwendungsmöglichkeiten der entwickelten Struktur werden zudem erweitert, wenn dem Kunstharz-Beschichtungspulver Graphit- und/oder Metall- und/oder Keramikpulver oder Mischungen daraus zugemischt werden bzw. hiermit abschließende Deckschichten erzeugt werden.

Aber auch im Nachhinein kann die nunmehr stabile Struktur durch geeignete Verfahren metallisiert oder verglast werden, wodurch sich weitere spezielle Anwendungen ergeben. Die erfindungsgemäße Struktur kann insbesondere Anwendung finden als Werkstoff für Schall- und Stoßabsorption sowie Spezialfilter, als Grundmaterial für Niedertemperatur-Wärmetauscher, Batterieelemente, elektromagnetische Abschirmungen und Lichtleiter; aber auch Anwendungen als luftdurchlässige Verankerungen/Einbauten im Putz und luftdurchlässige Trennwände sowie als Designermaterial sind vorteilhaft möglich. Gerade bei letzterem und weiteren potentiellen Einsatzmöglichkeiten ist entscheidend, daß die vorgeschlagene Struktur infolge der fertigen Vorstruktur kostengünstig (auch kostengünstiger als Metallschäume) ist; zudem ermöglicht die breite Auswahl der Beschichtungspulver und die hohe Gestaltungsfreiheit bei der Bauteilgeometrie vielfältige Variationsmöglichkeiten und damit verbunden maßgeschneiderte Anwendungen (auch durch Kombination unterschiedlicher Strukturen mittels Verkleben).

## Patentansprüche

1. Stabile Gitternetzstruktur aus Kunststoff mit einem retikulierten, ihre Geometrie bestimmenden Schaumstoff, dessen Stege allseitig und gleichmäßig mit Kunststoff pulverbeschichtet sind, wobei der Schaumstoff bevorzugt ein sogenannter harter Polyurethanschaumstoff ist, **dadurch gekennzeichnet, daß** die Kunststoffpulverschicht aus mehreren Einzelschichten aus gleichem und/oder unterschiedlichem Material besteht.

2. Stabile Gitternetzstruktur nach Anspruch 1, **dadurch gekennzeichnet, daß** das Kunststoffbeschichtungspulver Graphit und/oder Metall und/oder Keramik enthält.

3. Stabile Gitternetzstruktur nach Anspruch 1 und 2, **dadurch gekennzeichnet, daß** auf der Kunststoffpulverschicht eine oder mehrere Schichten aus Metall und/oder Glas aufgebracht sind.

4. Verfahren zur Herstellung stabiler Gitternetzstrukturen aus Kunststoff, nach einem des Ansprüche 1-3, **dadurch gekennzeichnet, daß** eine Vorstruktur aus retikuliertem Schaumstoff, allseitig mit einem Kunststoffpulver beschichtet wird, indem
a) die Vorstruktur über die Glas-/Schmelztemperatur des Beschichtungspulvers erwärmt,
b) die erwärmte Vorstruktur in einem geschlossenen Behälter zeitlich ausreichend lange von Kunststoffpulver umströmt und beschichtet sowie
c) das Beschichtungspulver durch gezielte Erwärmung zum Schmelzen und daraus folgend zum gleichmäßigen Verlauf gebracht wird.

5. Verfahren nach Anspruch 4, **dadurch gekennzeichnet, daß** die Erwärmung der Vorstruktur im Umlaufverfahren mittels Luft oder Inertgas durchgeführt wird.

6. Verfahren nach Anspruch 4, **dadurch gekennzeichnet, daß** die Erwärmung der Vorstruktur mittels Dampf und/oder Flüssigkeit durchgeführt wird.

7. Verfahren nach Anspruch 4, **dadurch gekennzeichnet, daß** die Beschichtung der Vorstruktur mittels Wirbelschichtverfahren erfolgt.

8. Verfahren nach Anspruch 4 bis 7, **dadurch gekennzeichnet, daß** der Beschichtungsvorgang mindestens einmal wiederholt wird.

9. Verfahren nach Anspruch 4 bis 8, **dadurch gekennzeichnet, daß** mindestens ein Beschichtungsvorgang mit einem selbstaushärtenden flüssigen Kunststoff erfolgt.

10. Verfahren nach Anspruch 4 bis 9, **dadurch gekennzeichnet, daß** ein Crowning-Kunstharzpulver verwendet wird.

11. Verfahren nach Anspruch 4 bis 7, **dadurch gekennzeichnet, daß** dem Kunstharz-Beschichtungspulver Graphit und/oder Metall und/oder Keramik zugemischt wird.

12. Verfahren nach Anspruch 4 bis 7, **dadurch gekennzeichnet, daß** unmittelbar nach dem Verflüssigen der Beschichtung Graphit-, Metall- oder Keramikpulver eingeblasen und danach eine abschließende Deckschicht mit selbstaushärtendem flüssigen Kunststoff oder Crowning-Kunstharzpulver aufgebracht wird.

## Claims

1. Stable lattice structure in a synthetic material with a reticulated foam determining its geometry, the elements of which are on all sides and evenly powder-coated with synthetic material, wherein the foam is preferably a so-called hard polyurethane foam, **characterised in that** the synthetic powder coating comprises several individual layers of the same and/or different material.

2. Stable lattice structure in accordance with Claim 1, **characterised in that** the synthetic coating powder contains graphite and/or metal and/or ceramic material.

3. Stable lattice structure in accordance with Claims 1 and 2, **characterised in that** one or more layers of metal and/or glass are applied on the synthetic powder coating.

4. Method to produce stable lattice structures of a synthetic material in accordance with one of the Claims 1 to 3, **characterised in that** a pre-structure of reticulated foam is coated on all sides with a synthetic powder, this being achieved by
a) heating the pre-structure to above the glass/melting temperature of the coating powder,
b) circulating synthetic powder around the heated pre-structure in a closed container for sufficiently long to build up a coating and
c) causing the coating powder to melt and subsequently to spread evenly through targeted heating.

5. Method in accordance with Claim 4, **characterised in that** the heating of the pre-structure is achieved in a circulation process by way of air or inert gas.

6. Method in accordance with Claim 4, **characterised in that** the heating of the pre-structure is achieved with steam and/or liquid.

7. Method in accordance with Claim 4, **characterised in that** the coating of the pre-structure is achieved by way of a fluid bed process.

8. Method in accordance with Claims 4 to 7, **characterised in that** the coating process is repeated at least once.

9. Method in accordance with Claims 4 to 8, **characterised in that** at least one coating process is performed with a self-curing liquid synthetic material.

10. Method in accordance with Claims 4 to 9, **characterised in that** a crowning synthetic resin powder is used.

11. Method in accordance with Claims 4 to 7, **characterised in that** graphite and/or metal and/or ceramic material is added to the synthetic resin coating powder.

12. Method in accordance with Claims 4 to 7, **characterised in that** graphite, metal or ceramic powder is blown in immediately after the melting of the coating and thereafter a concluding top layer with self-curing liquid synthetic material or crowning synthetic resin powder is applied.

## Revendications

1. Maillage solide en matière plastique avec une mousse réticulée définissant la géométrie, dont les tiges sont recouvertes de tous les côtés d'une couche de poudre régulière en matière plastique, la mousse étant de préférence une mousse de polyuréthane rigide, **caractérisé en ce que** la couche de poudre en matière plastique est formée de plusieurs couches séparées constituées d'un même matériau et/ou de différents matériaux.

2. Maillage solide selon la revendication 1, **caractérisé en ce que** la poudre de revêtement en matière plastique contient du graphite et/ou du métal et/ou de la céramique.

3. Maillage solide selon les revendications 1 et 2, **caractérisé en ce que** la couche de poudre en matière plastique est recouverte d'une ou de plusieurs couches de métal et/ou de verre.

4. Procédé de fabrication de maillages solides en matière plastique selon l'une des revendications 1 à 3, **caractérisé en ce qu'**un maillage de base en mousse réticulée est recouvert de tous les côtés d'une poudre en matière plastique par le fait que
a) la structure de base est chauffée au-delà de la température de transition vitreuse/de fusion,
b) la structure de base est placée suffisamment longtemps dans une cuve fermée dans laquelle elle est exposée à un flux de poudre en matière plastique qui la recouvre et
c) un chauffage ciblé conduit à la fusion et à l'application régulière de la poudre de revêtement.

5. Procédé selon la revendication 4, **caractérisé en ce que** le chauffage de la structure de base est réalisé par circulation d'air ou de gaz inerte.

6. Procédé selon la revendication 4, **caractérisé en ce que** le chauffage de la structure de base est réalisé au moyen de vapeur et/ou de liquide.

7. Procédé selon la revendication 4, **caractérisé en ce que** le revêtement de la structure de base est réalisé par bain fluidisé.

8. Procédé selon les revendications 4 à 7, **caractérisé en ce que** le processus de revêtement est répété au moins une fois.

9. Procédé selon les revendications 4 à 8, **caractérisé en ce qu'**une opération de revêtement au moins est réalisée avec une matière plastique liquide autodurcissante.

10. Procédé selon les revendications 4 à 9, **caractérisé par** l'utilisation d'une poudre de résine synthétique croning.

11. Procédé selon les revendications 4 à 7, **caractérisé en ce que** la poudre de revêtement en matière plastique contient du graphite et/ou du métal et/ou de la céramique.

12. Procédé selon les revendications 4 à 7, **caractérisé en ce que** de la poudre de graphite, de métal ou de céramique est soufflée immédiatement après la fusion du revêtement et qu'une dernière couche de finition en matière plastique liquide autodurcissante ou en poudre de résine synthétique croning est appliquée ensuite.
